# EUROPÄISCHE PATENTSCHRIFT

(11) **EP 3 380 363 B1**
(45) Veröffentlichungstag und Bekanntmachung des Hinweises auf die Patenterteilung: **24.07.2019**
(21) Anmeldenummer: 16801227.6
(22) Anmeldetag: 24.11.2016
(51) Int. Cl.: B60Q 3/78, B60Q 3/80, B60Q 9/00

(54) **KRAFTFAHRZEUG MIT INNENRAUMBELEUCHTUNGSVORRICHTUNG(EN) ZUM ABSTRAHLEN VON LAUFLICHT**
MOTOR VEHICLE HAVING INTERIOR LIGHTING DEVICE(S) FOR EMITTING MOVING LIGHT
VÉHICULE AUTOMOBILE DOTÉ D'UN OU DE PLUSIEURS DISPOSITIFS D'ÉCLAIRAGE DE L'HABITACLE SERVANT À PRODUIRE UNE CHAÎNE LUMINEUSE

(30) Priorität: 25.11.2015 DE 102015015235
(43) Veröffentlichungstag der Anmeldung: 03.10.2018
(73) Patentinhaber: Audi AG, 85045 Ingolstadt (DE)
(72) Erfinder: BERLITZ, Stephan, 86529 Schrobenhausen (DE); TONTSCH, Friedrich-Uwe, 85051 Ingolstadt (DE); KASTNER, Julia, 92339 Beilngries (DE)
(86) Internationale Anmeldenummer: PCT/EP2016/078713
(87) Internationale Veröffentlichungsnummer: WO 2017/089484

(56) Entgegenhaltungen:
- WO-A2-2015/067353
- DE-A1-102006 009 636
- DE-A1-102010 018 336
- DE-A1-102012 009 338
- DE-A1-102013 012 779

## Beschreibung

Die vorliegende Erfindung betrifft ein Kraftfahrzeug mit Innenraumbeleuchtungsvorrichtung(en) zum Abstrahlen von Lauflicht und ein Verfahren zum Erzeugen von Lauflicht im Innenraum eines Kraftfahrzeugs.

Elektrische Beleuchtungseinrichtungen, mit denen ein sogenannter Lauflichteffekt erzeugt werden kann, sind seit langem bekannt. Bei derartigen Beleuchtungseinrichtungen können bspw. in einer Abfolge von benachbarten Lichtquellen jeweils die benachbarten Lichtquellen in einer Richtung nacheinander kurz einen leuchtenden Zustand annehmen, so dass der Eindruck entsteht, die Lichtquelle selbst bewege sich. Eine andere Art von Lauflichteffekt kann erzielt werden, wenn in einer Abfolge von benachbarten Lichtquellen jeweils die benachbarten Lichtquellen in einer Richtung nacheinander so lange einen leuchtenden Zustand einnehmen, bis auch die letzte der Lichtquellen in der Abfolge einen leuchtenden Zustand eingenommen hat. Danach können alle Lichtquellen gleichzeitig ausgeschaltet werden und der genannte Vorgang wiederholt werden oder es können die Lichtquellen in umgekehrter Reihenfolge wieder ausgeschaltet werden. Hierdurch entsteht ein Lauflicht, dessen maximal leuchtende Länge durch die Länge der Abfolge der benachbarten Lichtquellen bestimmt wird. Diese und andere Lauflichteffekte können aber auch mittels anderer technischer Prinzipien realisiert werden, bspw. unter Verwendung von elektromechanischen Einrichtungen, wie etwa motorgetriebene Walzen, oder unter Verwendung von elektronischen Einrichtungen, wie etwa Mikroprozessoren.

Lauflichter besitzen einen hohen Aufmerksamkeitsfaktor, da sie von Menschen als scheinbar bewegte Objekte besser wahrgenommen werden als dies bei statischen Objekten der Fall ist. Beleuchtungseinrichtungen mit einem Lauflichteffekt werden bspw. in der Werbung, der Unterhaltungsindustrie und in Bereichen verwendet, die eine besondere Aufmerksamkeit erfordern, bspw. bei Warnsystemen.

Beleuchtungseinrichtungen zur Erzeugung eines Lauflichteffekts und deren Verwendung sind - über die oben erwähnten Anwendungsfälle hinaus - auch aus dem Gebiet der Kraftfahrzeugtechnik bekannt.

So beschreibt die DE 101 30 259 A1 ein Verfahren zur Steuerung mindestens eines Blinklichts, das sich zur Anzeige des Fahrtrichtungswechsels und/oder des Fahrzustandes, insbesondere Warnblinken, von Fahrzeugen eignet. Das Blinklicht wird in Spalten unterteilt, die abwechselnd die Zustände "Ein" und "Aus" annehmen. Insbesondere zur Anzeige des Fahrtzustandes wird ein Verfahren vorgeschlagen, bei dem das Blinklicht in Zeilen unterteilt ist, so dass eine Lauflichtanzeige von oben nach unten oder umgekehrt realisiert werden kann. Mit dem zuletzt genannten Verfahren kann das bekannte Warnblinken realisiert werden. Darüber hinaus kann es zur Signalisierung der Beschleunigungen, beispielsweise der Fahrtaufnahme nach einer Panne, verwendet werden.

Aus der DE 10 2011 119 230 B4 ist bekannt, bei Kraftwagen-Blinkleuchten die anzuzeigende Fahrtrichtung durch einen Lauflichteffekt zu betonen. Hierzu wird eine LED-Blinkleuchte betrieben, indem in einem Blinkzyklus ausgehend von einem ausgeschalteten Zustand aller LED-Gruppen der Blinkleuchte zunächst eine Anfangsgruppe eingeschaltet wird, danach ausgehend von der Anfangsgruppe der Reihe nach die übrigen LED-Gruppen nacheinander hinzugeschaltet werden, bis sämtliche LED-Gruppen eingeschaltet sind, anschließend sämtliche LED-Gruppen für eine vorgegebene Zeitdauer im eingeschalteten Zustand gehalten und schließlich wieder alle LED-Gruppen ausgeschaltet werden. Hierbei liegt eine Zeitdauer vom Aktivieren der Anfangsgruppe bis zum Erreichen des aktiven Zustands aller LED-Gruppen in einem Bereich von 100 ms bis 200 ms.

Und die DE 10 2013 101 198 A1 hat eine Beleuchtungsvorrichtung für Fahrzeuge mit einer Lichtlaufeinrichtung enthaltend mehrere LED-Lichtquellen, eine den LED-Lichtquellen zugeordnete Lichtführungseinheit und eine Ansteuereinheit zum Ansteuern der LED-Lichtquellen zum Gegenstand. Damit ist ein in Lichtlaufrichtung veränderbar abgebender Lichtstrom erzeugbar, wobei die Lichtführungseinheit einen Lichtleiter aufweist, der an gegenüberliegenden Endbereichen jeweils eine Lichteinkoppelfläche zur Einkopplung von Licht und sich in Lichtleitrichtung an die Lichteinkoppelfläche anschließende Flächen aufweist, an denen Licht totalreflektierbar und in Lichtleitrichtung weiterleitbar ist, und der Auskoppelelemente zur Umlenkung des eingekoppelten Lichtes in Richtung einer als Lichtauskoppelfläche dienenden Vorderseite aufweist, an der das Licht in Hauptabstrahlrichtung auskoppelbar ist. Die LED-Lichtquellen sind derart zu dem Lichtleiter angeordnet und ansteuerbar, dass in einer ersten Lauflichtstufe ein Lichtbündel nur zur Beleuchtung einer Rückseite des Lichtleiters und/oder ein Lichtbündel zur Beleuchtung der Rückseite des Lichtleiters und zur Beleuchtung der ersten Lichteinkoppelfläche, dass in einer weiteren Lichtleitstufe das Lichtbündel zur Beleuchtung der Rückseite des Lichtleiters und der ersten Lichteinkoppefläche und/oder ein weiteres Lichtbündel ausschließlich zur Einkopplung an der ersten Lichteinkoppelfläche und dass in einer weiteren Lauflichtstufe ein Lichtbündel zur Einkopplung an der zweiten Lichteinkoppelfläche des Lichtleiters vorgesehen sind.

Ein gattungsgemäßes Kraftfahrzeug ist aus der DE 10 2006 009 636 A1 bekannt.

Es ist Aufgabe der vorliegenden Erfindung, die vorteilhaften Eigenschaften eines Lauflichts auf neue und überraschende Weise im Innenraum eines Kraftfahrzeugs zur Verfügung zu stellen. Es ist eine weitere Aufgabe der vorliegenden Erfindung, ein neuartiges Verfahren unter Verwendung eines Lauflichts bei einem Kraftfahrzeug zur Verfügung zu stellen. Diese Aufgaben werden gelöst durch das Kraftfahrzeug gemäß Anspruch 1 und das Verfahren gemäß Anspruch 9. Vorteilhafte Weiterbildungen und Ausgestaltungen des Kraftfahrzeugs sind Gegenstand der Unteransprüche.

Erfindungsgemäß wird ein Kraftfahrzeug mit einer oder mehreren Blinklichtvorrichtung(en) zum Erzeugen eines Fahrtrichtungswechsel-Blinklichts oder eines Warnblinklichts, einer oder mehreren längsförmigen Innenraumbeleuchtungsvorrichtung(en) zum Abstrahlen von sichtbarem Licht in den Innenraum des Kraftfahrzeugs und einer der/den Innenraumbeleuchtungsvorrichtung(en) zugeordneten Steuerungseinrichtung zum Steuern der Innenraumbeleuchtungsvorrichtung(en) vorgeschlagen, wobei die Steuerungseinrichtung dazu eingerichtet ist, das Erzeugen eines Fahrtrichtungswechsel-Blinklichts oder eines Warnblinklichts durch die eine oder mehreren Blinklichtvorrichtung(en) zu erkennen.

Das erfindungsgemäße Kraftfahrzeug ist dadurch gekennzeichnet, dass
- die eine oder mehreren längsförmigen Innenraumbeleuchtungsvorrichtung(en) dazu eingerichtet ist/sind, sichtbares Licht in Form eines Lauflichts abstrahlen zu können, und
- das Kraftfahrzeug weiter Einrichtungen zur autonomen Steuerung des Kraftfahrzeugs aufweist und die Steuerungseinrichtung dazu eingerichtet ist, während der Erzeugung eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) nur dann derart anzusteuern, dass diese sichtbares Licht in Form eines Lauflichts abstrahlt/abstrahlen, wenn sich das Kraftfahrzeug im Status einer autonomen Steuerung befindet.

Durch die vorliegende Erfindung steht der hohe Aufmerksamkeitsfaktor, der mit Lauflichtern verbunden ist, im Inneren eines Kraftfahrzeugs zur Verfügung. Die vorliegende Erfindung macht Gebrauch von den physischen Gegebenheiten des Menschen (der sich scheinbar bewegende Objekte leichter wahrnimmt als statische Objekte) und nutzt diese in besonders zweckmäßiger Weise.

Bei einer autonomen (pilotierten) Steuerung eines Kraftfahrzeugs ist der Fahrer von den herkömmlicherweise erforderlichen Bedienhandlungen zum Führen des Kraftfahrzeugs entbunden (muss aber - zumindest nach den derzeit gültigen Vorschriften - jederzeit wieder die Kontrolle über das Kraftfahrzeug übernehmen können).

Aufgrund der autonomen Steuerung des Kraftfahrzeugs erfolgen bspw. keine Fahrtrichtungsanweisungen durch das Navigationssystem an den Fahrer und werden keine entsprechenden vorbereitenden und durchführenden Handlungen von Seiten des Fahrers vorgenommen. Vielmehr kann das Kraftfahrzeug während einer autonomen Steuerung bspw. selbständig eine zu Beginn oder während einer Fahrt in ein Navigationssystem eingegebene Zieladresse ansteuern und es werden von dem Kraftfahrzeug bspw. Spurwechsel und Abbiegevorgänge autonom vorbereitet und durchgeführt.

Dies kann bei den Insassen eines autonom gesteuerten Kraftfahrzeugs aufgrund der oftmals nicht vorhersehbaren oder nicht vorhergesehenen Reaktionen des Kraftfahrzeugs zu Gefühlen der Unsicherheit oder gar des Unwohlseins führen. Daher ist es gerade bei einem autonom gesteuerten Kraftfahrzeug von besonderem Vorteil, wenn bei hierbei vorgesehenen autonomen Fahrtrichtungswechseln (Spurwechsel oder Abbiegevorgängen), bei denen ein Fahrtrichtungswechsel-Blinklichts eingeschaltet wird, oder auch bei (fahrzeugseitigen oder externen) Störungen, bei denen autonom ein Warnblinklicht eingeschaltet wird, dies den Insassen des Kraftfahrzeugs mittels eines besonders gut wahrnehmbaren optischen Signals im Fahrzeuginnenraum angezeigt wird, wie dies gemäß der vorliegenden Erfindung vorgesehen ist.

Gemäß einer zweiten vorteilhaften Weiterbildung des Kraftfahrzeugs ist/sind die eine oder mehreren Innenraumbeleuchtungsvorrichtung(en) dazu eingerichtet, Lauflicht mit wenigstens einer gelben und/oder einer roten Farbe abstrahlen zu können.

In vielen Ländern ist vorgesehen, dass ein Fahrtrichtungswechsel-Blinklicht eine gelbe Lichtfarbe aufweist, in einigen Ländern darf ein Fahrtrichtungswechsel-Blinklicht jedoch auch eine rote Lichtfarbe aufweisen. Da für ein Warnblinklicht in aller Regel die gleichen Blinklichtvorrichtungen verwendet werden wie für das Fahrtrichtungswechsel-Blinklicht, kann ein Warnblinklicht ebenfalls eine gelbe oder eine rote Lichtfarbe aufweisen. Es ist somit von Vorteil, wenn die Innenraumbeleuchtungsvorrichtung(en) dazu eingerichtet ist/sind, Lauflicht wenigstens mit einer gelben und/oder einer roten Farbe abstrahlen zu können, da hierdurch eine zur jeweiligen Lichtfarbe des Fahrtrichtungswechsel-Blinklichts oder des Warnblinklichts identische oder doch ähnliche Lichtfarbe auch durch die Innenraumbeleuchtungsvorrichtung(en) erzeugt werden kann/können.

Gemäß einer dritten vorteilhaften Weiterbildung des Kraftfahrzeugs ist/sind die eine oder mehreren Innenraumbeleuchtungsvorrichtung(en) im Bereich des Armaturenbretts, der Innenseite der Fahrer- und Beifahrertür und/oder der Innenseite des sich an die Frontscheibe des Kraftfahrzeugs anschließenden Dachbereichs angeordnet.

Hierbei kann in vorteilhafter Weise vorgesehen sein, dass die Steuerungseinrichtung dazu eingerichtet ist, während des Erzeugens eines Fahrtrichtungswechsel-Blinklichts durch die eine oder mehreren Blinklichtvorrichtung(en) eine oder mehrere Innenraumbeleuchtungsvorrichtung(en) derart anzusteuern, dass
- im Bereich des Armaturenbretts des Kraftfahrzeugs ein Lauflicht erzeugt wird, das im Bereich hinter der Lenkhandhabe (Lenkrad) oder im Bereich der Längsmittelebene des Kraftfahrzeugs beginnt und in die Richtung der Kraftfahrzeugseite läuft, bei der das Fahrtrichtungswechsel-Blinklicht erzeugt wird,
- im Dachbereich des Kraftfahrzeugs ein Lauflicht erzeugt wird, das im Bereich der Längsmittelebene des Kraftfahrzeugs beginnt und in die Richtung der Fahrzeugseite läuft, bei der das Fahrtrichtungswechsel-Blinklicht erzeugt wird, und/oder
- ein Lauflicht im Bereich der Fahrertür oder der Beifahrertür erzeugt wird, derart, dass das Lauflicht im Bereich der Tür erzeugt wird, die sich an der Seite des Kraftfahrzeugs befindet, bei der das Fahrtrichtungswechsel-Blinklicht erzeugt wird, und das Lauflicht an dem der Front des Kraftfahrzeugs zugewandten Ende der Innenraumbeleuchtungsvorrichtung beginnt und in Richtung des dem Heck des Kraftfahrzeugs zugewandten Endes der Innenraumbeleuchtungsvorrichtung läuft.

Ebenso kann bei dem Kraftfahrzeug vorgesehen sein, dass die Steuerungseinrichtung dazu eingerichtet ist, während des Erzeugens eines Fahrtrichtungswechsel-Blinklichts durch die eine oder mehreren Blinklichtvorrichtung(en) eine oder mehrere Innenraumbeleuchtungsvorrichtung(en) derart anzusteuern, dass
- im Bereich des Armaturenbretts des Kraftfahrzeugs ein Lauflicht erzeugt wird, das im Bereich hinter der Lenkhandhabe (Lenkrad) oder im Bereich der Längsmittelebene des Kraftfahrzeugs beginnt und in die Richtung der Kraftfahrzeugseite läuft, bei der das Fahrtrichtungswechsel-Blinklicht erzeugt wird, und
- ein Lauflicht im Bereich der Fahrertür oder der Beifahrertür erzeugt wird, derart, dass das Lauflicht im Bereich der Tür erzeugt wird, die sich an der Seite des Kraftfahrzeugs befindet, bei der das Fahrtrichtungswechsel-Blinklicht erzeugt wird, und das Lauflicht an dem der Front des Kraftfahrzeugs zugewandten Ende der Innenraumbeleuchtungsvorrichtung beginnt und in Richtung des dem Heck des Kraftfahrzeugs zugewandten Endes der Innenraumbeleuchtungsvorrichtung läuft, wobei das Lauflicht an der jeweiligen Tür beginnt, sobald das Lauflicht im Bereich des Armaturenbretts das seitliche Ende der Innenraumbeleuchtungsvorrichtung erreicht hat.

Bei Erzeugen eines Warnblinklichts durch die einen oder mehreren Blinklichtvorrichtung(en) kann die Steuerungseinrichtung in vorteilhafter Weise dazu eingerichtet sein, die eine oder mehreren Innenraumbeleuchtungsvorrichtung(en) derart anzusteuern, dass
- im Bereich des Armaturenbretts des Kraftfahrzeugs zwei Lauflichter erzeugt werden, die im Bereich hinter der Lenkhandhabe oder im Bereich der Längsmittelebene des Kraftfahrzeugs beginnen und gleichzeitig auseinander in Richtung der beiden Fahrzeuglängsseiten laufen,
- im Dachbereich des Kraftfahrzeugs zwei Lauflichter erzeugt werden, die im Bereich der Längsmittelebene des Kraftfahrzeugs beginnen und gleichzeitig auseinander in Richtung der beiden Fahrzeuglängsseiten laufen, und/oder
- im Bereich der Fahrertür und der Beifahrertür je ein Lauflicht erzeugt wird, derart, dass die Lauflichter gleichzeitig an der der Front des Kraftfahrzeugs zugewandten Seite der Innenraumbeleuchtungsvorrichtungen beginnen und in Richtung der dem Heck des Kraftfahrzeugs zugewandten Enden der Innenraumbeleuchtungsvorrichtungen laufen.

Bei Erzeugen eines Warnblinklichts durch die eine oder mehreren Blinklichtvorrichtung(en) kann die Steuerungseinrichtung auch dazu eingerichtet sein, die eine oder mehreren Innenraumbeleuchtungsvorrichtung(en) derart anzusteuern, dass
- im Bereich des Armaturenbretts des Kraftfahrzeugs zwei Lauflichter erzeugt werden, die im Bereich hinter der Lenkhandhabe oder im Bereich der Mitte Längsmittelebene des Kraftfahrzeugs beginnen und gleichzeitig auseinander in Richtung der beiden Fahrzeuglängsseiten laufen, und
- im Bereich der Fahrertür und der Beifahrertür jeweils ein Lauflicht erzeugt wird, derart, dass die Lauflichter gleichzeitig an den der Front des Kraftfahrzeugs zugewandten Enden der Innenraumbeleuchtungsvorrichtungen beginnen und in Richtung der dem Heck des Kraftfahrzeugs zugewandten Enden der Innenraumbeleuchtungsvorrichtungen laufen, wobei die Lauflichter an den Türen beginnen, sobald die Lauflichter im Bereich des Armaturenbretts die seitlichen Enden der Innenraumbeleuchtungsvorrichtung erreicht haben.

Weitere Vorteile ergeben sich, wenn bei dem Kraftfahrzeug die Steuerungseinrichtung auch dazu eingerichtet ist, Daten bezüglich einer Stellung einer Lehne von wenigstens einem in Fahrtrichtung ausgerichteten Sitz der ersten Sitzreihe des Kraftfahrzeugs empfangen und während des Erzeugens eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) derart anzusteuern zu können, dass
- bis zu bei einem ersten vorgebbaren Winkel zwischen der Lehne des wenigstens einen Sitzes und dem in Richtung zur Front des Kraftfahrzeug weisenden Teils der Längsachse des Kraftfahrzeugs, ein Lauflicht nur im Bereich des Armaturenbretts und/oder im Bereich der Fahrer- und/oder Beifahrertür, und
- und ab einem sich an den ersten vorgebbaren Winkel anschließenden größeren zweiten Winkel der Lehne des wenigstens einen Sitzes, alternativ oder ergänzend zum Lauflicht im Bereich des Armaturenbretts und/oder im Bereich der Fahrer- und/oder Beifahrertür ein Lauflicht im Dachbereich des Kraftfahrzeugs erzeugt wird.

Die vorliegende Erfindung umfasst auch ein Verfahren zum Erzeugen von Lauflicht mittels einer oder mehrerer Innenraumbeleuchtungsvorrichtung(en) im Innenraum eines Kraftfahrzeugs, das Einrichtungen zur autonomen Steuerung des Kraftfahrzeugs aufweist, umfassend die Schritte,
- Bereitstellen bei einem Kraftfahrzeug von einer oder mehreren Blinklichtvorrichtung(en) zum Erzeugen eines Fahrtrichtungswechsel-Blinklichts oder eines Warnblinklichts, einer oder mehrerer längsförmiger Innenraumbeleuchtungsvorrichtung(en) zum Abstrahlen von sichtbarem Licht in Form von Lauflicht in den Innenraum des Kraftfahrzeugs, und einer der/den Innenraumbeleuchtungsvorrichtung(en) zugeordneten Steuerungseinrichtung zum Steuern der Innenraumbeleuchtungsvorrichtung(en), wobei die Steuerungseinrichtung auch dazu eingerichtet ist, das Erzeugen eines Fahrtrichtungswechsel-Blinklichts oder eines Warnblinklichts durch die eine oder mehreren Blinklichtvorrichtung(en) zu erkennen,
- Erkennen durch die Steuerungseinrichtung, dass durch die eine oder mehreren Blinklichtvorrichtung(en) ein Fahrtrichtungswechsel-Blinklichts oder eines Warnblinklichts erzeugt wird, und
- Ansteuern der einen oder mehreren Innenraumbeleuchtungsvorrichtung(en) durch die Steuerungseinrichtung derart, dass während des Erzeugens des Fahrtrichtungswechsel-Blinklichts oder des Warnblinklichts durch die eine oder mehreren Blinklichtvorrichtung(en) durch die eine oder mehreren Innenraumbeleuchtungsvorrichtung(en) sichtbares Licht in Form eines Lauflichts abgestrahlt wird, nur wenn sich das Kraftfahrzeug im Status einer autonomen Steuerung befindet.

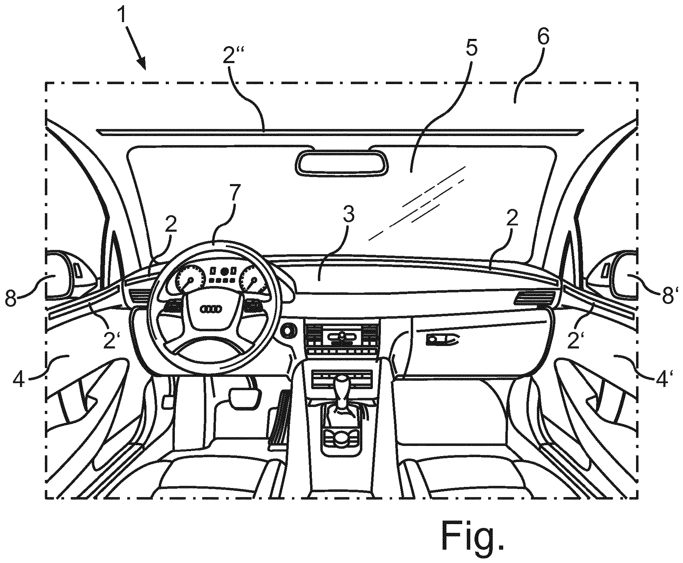

Die vorliegende Erfindung wird anhand der beigefügten Zeichnung näher erläutert.

Die Fig. zeigt schematisch und beispielhaft eine Ansicht eines Teils des Innenraums eines Kraftfahrzeugs gemäß der vorliegenden Erfindung.

Die Darstellungen in der Fig. sind rein schematisch und nicht maßstabsgerecht. Innerhalb der Fig. sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in der Fig. alleine gezeigten Merkmale und Merkmalskombinationen sind nicht nur in der jeweils angegebenen Kombination, sondern auch in anderen Kombinationen, die durch die beigefügten Ansprüche definiert sind, verwendbar.

Da in der Fig. nur ein Teil des Innenraums eines Kraftfahrzeugs 1 dargestellt ist, zeigt die Fig. keine Blinklichtvorrichtung zum Erzeugen eines Fahrtrichtungswechsel-Blinklichts oder eines Warnblinklichts im Außenbereich des Kraftfahrzeugs 1. Bei einer Blinklichtvorrichtung kann es sich um eine herkömmliche Blinklichtvorrichtung handeln, bei der mittels wenigstens einer herkömmlichen Glühbirne, Halogenbirne oder LED durch deren periodisches Ein- und Ausschalten ein punktuelles Blinklicht erzeugt wird. Es kann sich bei der Blinklichtvorrichtung aber auch eine handeln, bei der ein Lauflicht erzeugt werden kann. Auch Kombinationen der verschiedenen Blinklichtarten sind denkbar (bspw. ein punktuelles Blinklicht im Frontbereich und ein Lauflicht-Blinklicht im Heckbereich). Bezüglich der Blinklichtvorrichtung kann ohne besondere Einschränkungen Gebrauch gemacht werden von allen derzeit bekannten oder zukünftig bekannt werdenden technischen Lösungen sowohl zur Erzeugung eines punktuellen Blinklichts als auch eines Lauflicht-Blinklichts.

Bei für den Straßenverkehr zugelassenen Kraftfahrzeugen sind wenigstens vier Blinklichtvorrichtungen vorgesehen, jeweils eine im Bereich vorne links, vorne rechts, hinten links und hinten rechts. Darüber hinaus können weitere Blinklichtvorrichtungen vorgesehen sein, etwa in den Außenspiegeln, in den Seitenteilen der Karosserie und/oder im Dachbereich des Kraftfahrzeugs. Die zulässigen Positionen und Anzahl der Blinklichtvorrichtungen können durch Vorschriften geregelt sein.

Blinklichtvorrichtungen können nicht nur dazu vorgesehen sein, Licht abzustrahlen, das dazu vorgesehen ist, von sich außerhalb des Kraftfahrzeugs 1 befindlichen Verkehrsteilnehmern wahrgenommen zu werden, sondern auch von Insassen des Kraftfahrzeugs. So ist es etwa bekannt, dass bei einer in einem Außenspiegel 8, 8' eines Kraftfahrzeugs angeordneten Blinklichtvorrichtung (die grundsätzlich zur Abstrahlung von Licht vorgesehen ist, das von sich außerhalb des Kraftfahrzeugs 1 befindlichen Verkehrsteilnehmern wahrgenommen werden kann, die also Blinklicht etwa nach vorne und zur Seite abstrahlt) auch Blinklicht an dem Richtung Heck des Kraftfahrzeugs 1 weisenden Rahmen des Außenspiegels 8, 8' (bspw. durch eine Öffnung in dem Rahmen, in dem das Ende eines Lichtleiters angeordnet ist) abgestrahlt wird. Hierdurch kann ein Fahrer, der bspw. das Blinklicht an der linken Seite des Kraftfahrzeugs 1 aktiviert hat (zur Ankündigung eines Fahrtrichtungswechsels nach links), wenn er in den linken Außenspiegel 8 blickt erkennen, dass das Blinklicht an der linken Seite seines Kraftfahrzeugs 1 aktiv ist. Entsprechendes gilt für den rechten Außenspiegel 8'.

Diese Information (und die entsprechende Blinklichtvorrichtung) könnte bei Kraftfahrzeugen 1 nicht mehr zur Verfügung stehen, bei denen wenigstens einer der Außenspiegel 8, 8' durch wenigstens eine Kameraeinrichtung ersetzt ist. Da erfindungsgemäß vorgesehen ist, dass während des Erzeugens eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) 2, 2', 2" sichtbares Licht in Form eines Lauflichts abstrahlt/abstrahlen, wird diese dann möglicherweise fehlende Information durch das Lauflicht (die Wischbewegung) im Interieur des Kraftfahrzeugs 1 vollwertig ersetzt.

Vor diesem Hintergrund sei ausdrücklich darauf hingewiesen, dass das Kraftfahrzeug 1 gemäß der vorliegenden Erfindung auch solche umfasst, bei denen wenigstens einer der Außenspiegel 8, 8' durch wenigstens eine Kameraeinrichtung ersetzt ist, und dass das Verfahren gemäß der vorliegenden Erfindung auch bei derartigen Kraftfahrzeugen 1 durchgeführt werden kann.

Wie in der Fig. schematisch und beispielhaft gezeigt ist, weist das Kraftfahrzeug 1 eine oder mehrere längsförmige Innenraumbeleuchtungsvorrichtung(en) 2, 2', 2" zum Abstrahlen von sichtbarem Licht in den Innenraum des Kraftfahrzeugs 1 auf. Längsförmige Innenraumbeleuchtungsvorrichtungen sind aus dem Stand der Technik an sich bereits bekannt und werden oftmals zur ambienten Beleuchtung ("Ambientbeleuchtung") oder zur Markierung von bestimmten Bereichen ("Markerlicht") verwendet.

Diese Innenraumbeleuchtungsvorrichtungen weisen oftmals einen länglichen Lichtleitkörper auf, in den mittels einer oder mehrerer Lichtquellen Licht eingestrahlt bzw. eingekoppelt werden kann. Sollen hierbei verschiedene Lichtfarben realisiert werden, können entweder verschiedene Lichtquellen verwendet werden, die jeweils die gewünschte Lichtfarbe in den Lichtleitkörper einstrahlen (bspw. verschiedene LEDs) oder es können eine oder mehrere Lichtquellen verwendet werden, die jeweils mehrere Lichtfarben einzustrahlen vermögen, wie dies etwa bei RGB-LEDs der Fall ist.

Wird Licht in einen länglichen Lichtleitkörper derart eingestrahlt, dass sich das Licht innerhalb des Lichtleitkörpers unter Totalreflexion an den Wandungen des Lichtleitkörpers fortbewegt, so können geeignete Lichtauskopplungselemente oder -strukturen vorgesehen sein, damit eine Auskopplung von Licht durch die Wandungen des Lichtleitkörper und gegebenenfalls auch eine möglichst gleichmäßige Lichtstärke entlang des Lichtleitkörpers erreicht wird. Der Lichtleitkörper von derartigen Innenraumbeleuchtungsvorrichtungen kann bspw. zumindest teilweise mit einem diffusen Material umgeben oder abgedeckt sein. Die Innenraumbeleuchtungsvorrichtungen können Licht entweder direkt in den Innenraum des Kraftfahrzeugs abstrahlen oder indirekt.

Für die Zwecke der vorliegenden Erfindung können ohne besondere Einschränkung alle aus dem Stand der Technik bekannten und zukünftig bekannt werdenden längsförmigen Innenraumbeleuchtungsvorrichtungen zur Abgabe eines sichtbaren Lichts in den Innenraum des Kraftfahrzeugs 1 verwendet werden (also insbesondere auch die oben beschriebenen Ambientbeleuchtungen und Markerbeleuchtungen), vorausgesetzt, sie sind zumindest auch dazu eingerichtet, sichtbares Licht (d.h. solches mit einer Wellenlänge im Bereich von etwa 380 nm bis 780 nm) in Form eines Lauflichts abstrahlen zu können.

Wie bereits im einleitenden Teil erwähnt wurde, ist aus dem Stand der Technik bereits eine Anzahl an technischen Lösungen zur Erzeugung eines Lauflichts bekannt und es können für die Zwecke der vorliegenden Erfindung ohne besondere Einschränkung alle aus dem Stand der Technik bekannten und zukünftig bekannt werdenden technischen Lösungen zur Erzeugung eines Lauflichts für die Innenraumbeleuchtungsvorrichtung(en) 2, 2', 2" verwendet werden.

Die Innenraumbeleuchtungsvorrichtung(en) 2, 2', 2" gemäß der vorliegenden Erfindung kann/können an jedem geeigneten Platz im Innenraum des Kraftfahrzeugs 1 angeordnet sein. Da es aber Zweck der Innenraumbeleuchtungsvorrichtung(en) 2, 2', 2" ist, dass das von ihr/ihnen abgestrahlte Lauflicht insbesondere vom Fahrer des Kraftfahrzeugs 1 sicher wahrgenommen werden kann, ist/sind die Innenraumbeleuchtungsvorrichtung(en) 2, 2', 2" bevorzugt derart im Innenraum des Kraftfahrzeugs 1 angeordnet, dass sie sich im Blickfeld eines sich auf dem Fahrersitz befindlichen Fahrers befinden.

Vor diesem Hintergrund ist es von Vorteil, wenn die Innenraumbeleuchtungsvorrichtung(en) 2, 2', 2" im Bereich des Armaturenbretts 3, der Innenseite der Fahrer- 4 und Beifahrertür 4' und/oder der Innenseite des sich an die Frontscheibe 5 des Kraftfahrzeugs 1 anschließenden Dachbereichs 6 angeordnet ist/sind.

Die Ausrichtung der Innenraumbeleuchtungsvorrichtung(en) 2, 2', 2" ist dabei bevorzugt so gewählt, dass sich das/die von ihr/ihnen erzeugte(n) Lauflicht(er) (periodisch) im Wesentlichen in horizontaler Richtung bewegt/bewegen. Unter "im Wesentlichen in horizontaler Richtung " ist dabei zu verstehen, dass sich aus Sicht des Fahrers das Lauflicht bei natürlicher Betrachtungsweise horizontal nach rechts, nach links, nach vorne und/oder nach hinten bewegt, wobei im Sinne der vorliegenden Erfindung eine Abweichung von bis zu etwa 20° aus der Horizontalen noch vom Begriff "horizontale Richtung" umfasst ist.

Wie in der Fig. angedeutet ist, kann/können die Innenraumbeleuchtungsvorrichtung(en) 2, 2', 2" eine geradlinige oder auch eine leicht bogenförmige Gestaltung aufweisen.

Sind Innenraumbeleuchtungsvorrichtungen 2' im Bereich der Innenseite der Fahrer- 4 und Beifahrertür 4' angeordnet, so kann vorgesehen sein, dass sich die Innenraumbeleuchtungsvorrichtungen 2' von dem der Front des Kraftfahrzeugs 1 zugewandten Ende der Türen 4, 4' bis hin zu dem dem Heck des Kraftfahrzeugs 1 zugewandten Ende der Türen 4, 4' erstrecken. Hierbei ist der Begriff "Ende" nicht wortwörtlich zu verstehen, d.h. die Innenraumbeleuchtungsvorrichtungen 2' können in einiger Entfernung (bspw. einige Millimeter oder Zentimeter) von dem der Front des Kraftfahrzeugs 1 zugewandten Ende der Türen 4, 4' beginnen und in einiger Entfernung (bspw. einige Millimeter oder Zentimeter) vor dem dem Heck des Kraftfahrzeugs 1 zugewandten Ende der Türen 4, 4' enden.

Da oftmals das dem Heck des Kraftfahrzeugs 1 zugewandte Ende der Türen 4, 4' von einem auf dem Fahrersitz sitzenden Fahrer nicht eingesehen werden kann, kann ebenfalls vorgesehen sein, dass sich die Innenraumbeleuchtungsvorrichtungen 2' nur von dem der Front des Kraftfahrzeugs 1 zugewandten Ende der Türen 4, 4' über etwa die Hälfte der Türbreite oder über etwa zwei Drittel der Türbreite erstreckt/erstrecken.

Das Kraftfahrzeug 1 weist weiter eine - in der Fig. nicht dargestellte - Steuerungseinrichtung auf, die dazu eingerichtet ist, das Erzeugen eines Fahrtrichtungswechsel-Blinklichts oder eines Warnblinklichts durch die Blinklichtvorrichtung zu erkennen. Bei dieser Steuereinrichtung kann es sich um jede geeignete Steuereinrichtung handeln, diese kann bspw. ein Bestandteil der Blinklichtvorrichtung(en) oder eine davon getrennte Einrichtung sein.

Die Steuerungseinrichtung ist weiter dazu eingerichtet, die Innenraumbeleuchtungsvorrichtung(en) 2, 2', 2" derart zu steuern, dass während des Erzeugens eines Fahrtrichtungswechsel-Blinklichts oder eines Warnblinklichts durch die Blinklichtvorrichtung die Innenraumbeleuchtungsvorrichtung(en) 2, 2', 2" sichtbares Licht in Form eines/von (periodischen) Lauflichts/Lauflichtern abstrahlt/abstrahlen.

Da Fachleuten bekannt ist, wie eine entsprechende Steuerungseinrichtung aufgebaut sein kann, damit mit ihr die oben beschriebenen Funktionen realisiert werden können, ist es nicht erforderlich, hierauf in der vorliegenden Anmeldung näher einzugehen.

Wie oben bereits erwähnt, ist die vorliegende Erfindung insbesondere von Vorteil wenn bei einem Kraftfahrzeug 1 eine autonome (pilotierte) Steuerung durchgeführt wird. Bei einem autonomen oder pilotierten Fahren übernehmen fahrzeugseitige Systeme die Fahraufgabe des Fahrers und bewegt sich das Kraftfahrzeug 1 vollautomatisch. Hierzu ist es erforderlich, dass das Kraftfahrzeug 1 Einrichtungen zur autonomen Steuerung des Kraftfahrzeugs 1 aufweist, wie etwa Sensoren zur Erfassung einer Umgebung des Kraftfahrzeugs 1, einen automatisch gesteuerten Antrieb, eine automatische gesteuerte Lenkung, eine automatisch gesteuerte Bremsanlage, eine Einrichtung zur Car2Car oder Car2X-Kommunikation, eine automatisierte Zielführung mittels eines (satellitengestützten) Navigationssystems, etc.

Der Zustand einer autonomen (pilotierten) Steuerung kann durch wenigstens eine fahrzeugseitige Einrichtung signalisiert werden (etwa eine hierfür eingerichtete, fahrzeugseitige digitale Recheneinrichtung), so dass die Steuerungseinrichtung gemäß der vorliegenden Erfindung ohne weiteres erkennen kann, ob bzw. dass sich das Kraftfahrzeug 1 im Status einer autonomen Steuerung befindet.

Gemäß einer vorteilhaften Ausgestaltung der Erfindung kann vorgesehen sein, dass die Steuerungseinrichtung dazu eingerichtet ist, während der Erzeugung eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) 2, 2', 2" nur dann derart anzusteuern, dass diese sichtbares Licht in Form eines Lauflichts abstrahlt/abstrahlen, wenn sich das Kraftfahrzeug 1 im Status einer autonomen Steuerung befindet.

Dies deshalb, weil während einer autonomen Steuerung eines Kraftfahrzeugs 1 - wie oben bereits erwähnt - ein Fahrer von seinen Fahraufgaben entbunden ist und dieser somit bspw. die Umgebung des Kraftfahrzeugs 1 betrachten, lesen oder spielen kann. In einer solchen Situation ist es für einen Fahrer, anders als in einer Situation der nicht-autonomen Steuerung, bei der der Fahrer eigenhändig ein Fahrtrichtungswechsel-Blinklicht oder ein Warnblinklicht einschaltet, dieser also aktiv und bewusst am Fahrgeschehen teilnimmt, besonders von Vorteil, wenn diesem - aber auch anderen Insassen des Kraftfahrzeugs 1 - ein gut sichtbares optisches Signal in Bezug auf einen bevorstehenden Fahrtrichtungswechsel oder eine interne oder externe Störung angezeigt wird, um ein Gefühl einer als unangenehm empfundenen Überraschung oder gar einer Unsicherheit zu vermeiden.

(Ein) Lauflicht/Lauflichter ist/sind während einer autonomen Steuerung eines Kraftfahrzeugs 1 auch deshalb von besonderem Vorteil, weil diese(s) regelmäßig eine größere Länge aufweist/aufweisen, als bspw. die herkömmlich bekannten Blinklichter im Innenraum des Kraftfahrzeugs 1. Herkömmliche Blinklichter, die oftmals im Bereich des Kombiinstruments hinter der Lenkhandhabe 7 angeordnet sind, können während einer autonomen Steuerung eines Kraftfahrzeugs 1 bspw. durch ein vom Fahrer gehaltenes Buch, eine vom Fahrer gehaltene Zeitung oder Zeitschrift, oder durch einen von einem Fahrer gehaltenen Tablet-Computer verdeckt werden und können somit - anders als (ein) Lauflicht(er) mit größerer Ausdehnung - nicht von diesem wahrgenommen werden.

Es sei jedoch darauf hingewiesen, dass die vorliegende Erfindung selbstverständlich nicht auf eine Anwendung bei einem Kraftfahrzeug beschränkt ist, das sich im Status einer autonomen Steuerung befindet, d.h. die vorliegende Erfindung ist selbstverständlich auch bei einem manuellen, nicht autonom gesteuerten Zustand des Kraftfahrzeugs anwendbar. Dies auch deshalb, weil ein Nutzer (Kunde) erst an das für ihn ungewohnte Lauflicht (die neue Lichtquelle) gewöhnt werden und die durch es vermittelte Information erlernen muss. Von daher ist es von Vorteil, wenn ein Kunde bereits mit dem Lauflicht konfrontiert war und daran gewöhnt ist, bevor sich das Kraftfahrzeug autonom gesteuert fortbewegt.

Damit für Insassen eines Kraftfahrzeugs 1 eine besonders leichte Assoziation zwischen (einem) Lauflicht(ern) und der durch es/sie vermittelten Information erzielt werden kann, kann in vorteilhafter Weise vorgesehen sein, dass die Innenraumbeleuchtungsvorrichtung(en) 2, 2' 2" jeweils ein Lauflicht mit der Farbe in den Innenraum des Kraftfahrzeugs 1 abstrahlt/abstrahlen, das (zumindest in etwa) der Farbe entspricht, die von der einen oder mehreren Blinklichtvorrichtung(en) nach extern abgestrahlt wird. So kann etwa vorgesehen sein, dass wenn die Blinklichtvorrichtung(en) ein Fahrtrichtungswechsel-Blinklicht oder ein Warnblinklicht mit gelber Lichtfarbe nach extern abstrahlt/abstrahlen, Lauflicht(er) im Inneren des Kraftfahrzeugs 1 die gleiche oder doch eine ähnliche, gelbe Farbe aufweist/aufweisen.

Es kann aber auch vorgesehen sein, dass Lauflicht(er) im Inneren des Kraftfahrzeugs 1 eine von dem nach extern abgestrahlten Licht verschiedene Farbe aufweist/aufweisen. So ist es bspw. im Falle eines gelben Warnblinklichts oftmals vorgesehen, dass ein Warnblinklicht-Schalter im Inneren des Kraftfahrzeugs 1 bei eingeschaltetem Warnblinklicht ein blinkendes, rotes Licht abstrahlt.

Vor diesem Hintergrund kann bspw. erfindungsgemäß vorgesehen sein, dass bei eingeschaltetem (gelbem) Warnblinklicht die Innenraumbeleuchtungsvorrichtung(en) 2, 2', 2" (ein) Lauflicht(er) mit einer roten Farbe abstrahlt/abstrahlen. Eine derartige Ausgestaltung ist auch deshalb von Vorteil, weil eine rote Lichtfarbe als "Warnfarbe" wahrgenommen wird.

Wie ebenfalls oben bereits erwähnt, können verschiedene Lichtfarben bei der/den Innenraumbeleuchtungsvorrichtung(en) 2, 2', 2" etwa mit Hilfe von verschiedenen Lichtquellen (Lichterzeugungseinrichtungen), die jeweils die gewünschte Lichtfarbe abstrahlen, oder mittels einer oder mehreren Lichtquellen realisiert werden, die jeweils mehrere Lichtfarben abzustrahlen vermögen, wie bspw. mittels RGB-LEDs.

Die Lichtfarbe(n), mit der/denen das Lauflicht leuchtet und die Anzahl an möglichen Lichtfarben des Lauflichts sind nicht besonders beschränkt. So kann etwa vorgesehen sein, dass das Lauflicht mit einer jeden Lichtfarbe leuchten kann, die mit Hilfe einer RGB-LED erzeugt werden kann. Hierbei kann vorgesehen sein, dass das Lauflicht während des Erzeugens eines Fahrtrichtungswechsel-Blinklichts oder eines Warnblinklichts durch die eine oder mehreren Blinklichtvorrichtung(en) mit nur einer einzigen Farbe leuchtet, oder dass vorgesehen ist, dass sich die Lichtfarbe währenddessen vorgebbaren Zeitabständen ein oder mehrmals, abrupt oder kontinuierlich ändert.

Die Art des Lauflichts (etwa deren Laufrichtung(en), deren LaufGeschwindigkeiten), deren Periodizität und deren Erscheinungsbild) unterliegt erfindungsgemäß keine besonderen Beschränkung, und es können alle bekannten (siehe etwa Beschreibungseinleitung und erwähnter Stand der Technik) und noch bekannt werdende Arten an Lauflichtern für die vorliegende Erfindung verwendet werden. Jedoch ist es auch diesbezüglich von Vorteil, wenn die Art des/der Lauflichts/Lauflichter derart ist, dass eine leichte Assoziation zwischen dem/den Lauflicht(ern) und der durch es/sie vermittelten Information erreicht wird.

So ist es bspw. bei einem Fahrtrichtungswechsel-Blinklicht, mit dem ein Fahrtrichtungswechsel nach rechts angezeigt wird, von Vorteil, wenn auch das Lauflicht im Innenraum des Kraftfahrzeugs 1 nach rechts läuft, bzw. in der rechten vorderen Fahrzeugtür 4 von vorne nach hinten läuft. Entsprechendes gilt konsequenter Weise bei einem Fahrtrichtungswechsel-Blinklicht, mit dem ein Fahrtrichtungswechsel nach links angezeigt wird.

Und bei einem Warnblinklicht, bei dem eine Blinklichtvorrichtung des Kraftfahrzeugs 1 bspw. vorne rechts, vorne links, hinten rechts und hinten links jeweils ein Blinklicht abstrahlt, ist es von Vorteil, wenn Lauflicht im Inneren des Kraftfahrzeugs 1 gleichzeitig sowohl nach rechts als auch nach links und/oder gleichzeitig in beiden vorderen Fahrzeugtüren 4, 4' läuft. Dies auch deshalb, um hierdurch einen deutlichen Unterschied zu der Situation bei einem Fahrtrichtungswechsel-Blinklicht herzustellen.

Ebenfalls im Sinne einer leichten Assoziation zwischen Lauflicht(ern) und der durch es/sie vermittelten Information ist es von Vorteil, wenn Lauflicht(er), das/die im Bereich des Armaturenbretts 3 oder des Dachs 6 des Kraftfahrzeugs 1 vorgesehen ist/sind, jeweils etwa mittig beginnt/beginnen und dann nach außen in Richtung der Fahrzeuglängsseiten laufen. Unter "etwa mittig" ist im Sinne der vorliegenden Erfindung der Bereich von der Längsmittelebene des Kraftfahrzeugs 1 bis hin zum Bereich hinter der Lenkhandhabe 7 zu verstehen, auch wenn dieser letztere Bereich bei normalen Kraftfahrzeugen (d.h. solchen mit zwei oder mehr Sitzplätzen in der ersten Reihe) regelmäßig außerhalb der Längsmittelebene des Kraftfahrzeugs angeordnet ist.

Um bei einem gleich schnellen Lauf von zwei Lauflichtern, die im Bereich des Armaturenbretts 3 und/oder im Bereich des Dachs 6 abgestrahlt werden, eine symmetrische Erscheinung des Lauflichtverlaufs zu erreichen, ist es von Vorteil, wenn die Lauflichter von der Längsmittelebene des Kraftfahrzeugs 1 aus beginnen und die Anordnung und Länge der Innenraumbeleuchtungsvorrichtung(en) 2, 2" im Innenraum symmetrisch (insbesondere spiegelsymmetrisch) zur Längsmittelebene gewählt ist.

Bei Innenraumbeleuchtungsvorrichtungen 2' im Bereich der vorderen Fahrzeugtüren 4, 4' können diese eine identische Form und Länge aufweisen und auf gleiche Weise (d.h. in Bezug auf Position und Orientierung) in den jeweiligen Türen 4, 4' angeordnet sein.

Einige bevorzugte Beispiele für den Lauf von Lauflichtern im Falle eines Fahrtrichtungswechsel-Blinklichts und eines Warnblinklichts sind Gegenstand der Ansprüche 5 bis 8. Es sei jedoch ausdrücklich darauf hingewiesen, dass die vorliegende Erfindung nicht auf diese Beispiele beschränkt ist.

Bei den Ausgestaltungen gemäß der Ansprüche 6 und 8 kann bei einer entsprechend gewählten Anordnung und Länge der Innenraumbeleuchtungsvorrichtungen 2, 2' im Bereich des Armaturenbretts 3 und der vorderen Fahrzeugtüren 4, 4', (ein) Lauflicht(er) erzeugt werden, das/die unterbrechungsfrei vom Bereich des Armaturenbretts 3 bis hinein in die vorderen Fahrzeugtür(en) 4, 4' läuft/laufen. Hierdurch kann/können (ein) besonders lange(s) Lauflicht(er) realisiert werden, das/die mit größter Wahrscheinlichkeit von einem Insassen (insbesondere auch dem Fahrer) des Kraftfahrzeugs 1 wahrgenommen wird.

Bei einer autonomen (pilotierten) Steuerung eines Kraftfahrzeugs 1 kann nicht ausgeschlossen werden, dass ein Fahrer bei seinem Fahrersitz die Lehne in eine liegende oder fast liegende Position verändert, um während des Zustands der autonomen (pilotierten) Steuerung zu ruhen oder zu entspannen.

Vor diesem Hintergrund ist es von Vorteil, wenn - wie dies gemäß einer vorteilhaften Weiterbildung des Kraftfahrzeugs 1 vorgesehen ist - die Steuerungseinrichtung auch dazu eingerichtet ist, Daten bezüglich einer Stellung einer Lehne von wenigstens einem in Fahrtrichtung ausgerichteten Sitz der ersten Sitzreihe des Kraftfahrzeugs 1 empfangen und während des Erzeugens eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) 2, 2', 2" derart anzusteuern zu können, dass
- bis zu bei einem ersten vorgebbaren Winkel zwischen der Lehne des wenigstens einen Sitzes und dem in Richtung zur Front des Kraftfahrzeug 1 weisenden Teils der Längsachse des Kraftfahrzeugs 1, (ein) Lauflicht(er) nur im Bereich des Armaturenbretts 3 und/oder im Bereich der Fahrer- 4 und/oder Beifahrertür 4', und
- ab einem sich an den ersten vorgebbaren Winkel anschließenden, größeren zweiten Winkel der Lehne des wenigstens einen Sitzes, alternativ oder ergänzend zu Lauflicht im Bereich des Armaturenbretts 3 und/oder im Bereich der Fahrer- 4 und/oder Beifahrertür 4 (ein) Lauflicht(er) im Dachbereich 6 des Kraftfahrzeugs 1
   erzeugt wird/werden.

Als erster Winkel kann dabei bspw. 100°, 105°, 110°, 115°, 120°, 125° oder 130° vorgegeben sein. Innerhalb eines Bereichs von 100° bis etwa 130° existiert eine vergleichsweise aufrechte Ausrichtung der Lehne und es kann davon ausgegangen werden, dass sich das Armaturenbrett 3 und/oder der Bereich der vorderen Fahrzeugtüren 4, 4' unterhalb von deren Scheiben noch innerhalb des Blickfelds (gegebenenfalls am Rand des Blickfelds) eines "gerade ausschauenden" Insassen des Kraftfahrzeugs 1 (d.h. eines Insassen, der sich mit seinem Rücken gegen die Lehne lehnt und bezogen auf die Halswirbelsäule eine nicht geneigte Kopfhaltung einnimmt) befindet. In einem solchen Fall kann es ausreichend sein, wenn (ein) Lauflicht(er) nur im Bereich des Armaturenbretts 3 und/oder im Bereich der Fahrer- 4 und/oder Beifahrertür 4' erzeugt wird/werden, da diese(s) noch sicher wahrnehmen kann/können.

Bei einem Winkel der Lehne, der größer als der vorgebbare erste Winkel ist (d.h. bspw. größer als 130°), d.h. bei einer vergleichsweise flachen Ausrichtung der Lehne, muss hingegen angenommen werden, dass sich das Armaturenbrett 3 und/oder der Bereich der vorderen Fahrzeugtüren 4, 4' unterhalb von deren Scheiben bei einem "gerade ausschauenden" Insassen des Kraftfahrzeugs 1 nicht mehr in dessen Blickfeld befindet. In einem solchen Fall ist es dann von Vorteil, wenn alternativ oder ergänzend zu(m) Lauflicht(ern) im Bereich des Armaturenbretts 3 und/oder im Bereich der Fahrer- 4 und/oder Beifahrertür 4' Lauflicht(er) im Dachbereich 6 des Kraftfahrzeugs 1 erzeugt wird/werden, um sicherzustellen, dass das/die Lauflicht(er) auch von einem Insassen "in Ruheposition" sicher wahrgenommen werden kann/können.

Soweit in der vorliegenden Anmeldung davon gesprochen wird, dass (ein) Lauflicht(er) "während" eines Erzeugens eines Fahrtrichtungswechsel-Blinklichts oder eines Warnblinklichts erzeugt wird/werden, so kann die Dauer des Lauflichts/der Lauflichter (d.h. die Zeitdauer, während der ein laufendes Licht sichtbar ist) entweder so lange andauern, wie auch ein Fahrtrichtungswechsel-Blinklicht oder ein Warnblinklicht erzeugt wird, oder kürzer. In vorteilhafter Weise beginnt/beginnen das Lauflicht/die Lauflichter aber in jedem Fall mit dem Beginn des Erzeugens eines Fahrtrichtungswechsel-Blinklichts oder eines Warnblinklichts. Es kann bspw. vorgesehen sein, dass im Falle des Erzeugens eines Fahrtrichtungswechsel-Blinklichts oder eines Warnblinklichts lediglich einige wenige Male (ein) Lauflicht(er) (etwa zwei- oder dreimal) im Innenraum angezeigt werden, auch wenn danach bei dem Kraftfahrzeug das Fahrtrichtungswechsel-Blinklichts oder das Warnblinklicht weiterhin aktiv ist.

Das Lauflicht/die Lauflichter können ergänzend oder alternativ zu herkömmlichen Blinklichtern (etwa im Bereich des Kombiinstruments, Warnblinklicht-Schalter) erzeugt werden. Auch ist es von der vorliegenden Erfindung umfasst, wenn bei Erzeugung von Lauflicht(ern) auch ein anderes, wahrnehmbares Signal im Innenraum des Kraftfahrzeugs erzeugt wird, wie etwa ein akustisches Signal oder ein haptisch wahrnehmbares Signal (etwa mittels Vibration der Lenkhandhabe oder im Bereich des/der Sitze).

## Patentansprüche

1. Kraftfahrzeug (1) mit einer oder mehreren Blinklichtvorrichtung(en) zum Erzeugen eines Fahrtrichtungswechsel-Blinklichts oder eines Warnblinklichts, einer oder mehreren längsförmigen Innenraumbeleuchtungsvorrichtung(en) (2, 2', 2") zum Abstrahlen von sichtbarem Licht in den Innenraum des Kraftfahrzeugs (1) und einer der/den Innenraumbeleuchtungsvorrichtung(en) (2, 2', 2") zugeordneten Steuerungseinrichtung zum Steuern der Innenraumbeleuchtungsvorrichtung(en) (2, 2', 2"),
wobei die Steuerungseinrichtung dazu eingerichtet ist, das Erzeugen eines Fahrtrichtungswechsel-Blinklichts oder eines Warnblinklichts durch die eine oder mehreren Blinklichtvorrichtung(en) zu erkennen,
**dadurch gekennzeichnet, dass** die eine oder mehreren längsförmigen Innenraumbeleuchtungsvorrichtung(en) (2, 2', 2") dazu eingerichtet ist/sind, sichtbares Licht in Form eines Lauflichts abstrahlen zu können, und
- das Kraftfahrzeug (1) weiter Einrichtungen zur autonomen Steuerung des Kraftfahrzeugs (1) aufweist und die Steuerungseinrichtung dazu eingerichtet ist, während der Erzeugung eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) (2, 2', 2") nur dann derart anzusteuern, dass diese sichtbares Licht in Form eines Lauflichts abstrahlt/abstrahlen, wenn sich das Kraftfahrzeug (1) im Status einer autonomen Steuerung befindet.

2. Kraftfahrzeug (1) gemäß Anspruch 1,
**dadurch gekennzeichnet, dass**
die eine oder mehreren Innenraumbeleuchtungsvorrichtung(en) (2, 2', 2") dazu eingerichtet ist/sind, Lauflicht mit wenigstens einer gelben und/oder einer roten Farbe abstrahlen zu können.

3. Kraftfahrzeug (1) gemäß Anspruch 1 oder 2,
**dadurch gekennzeichnet, dass**
die eine oder mehreren Innenraumbeleuchtungsvorrichtung(en) (2, 2', 2") im Bereich des Armaturenbretts (3), der Innenseite der Fahrer- und Beifahrertür (4, 4') und/oder der Innenseite des sich an die Frontscheibe (5) des Kraftfahrzeugs (1) anschließenden Dachbereichs (6) angeordnet ist/sind.

4. Kraftfahrzeug (1) gemäß Anspruch 3,
**dadurch gekennzeichnet, dass**
die Steuerungseinrichtung dazu eingerichtet ist, während des Erzeugens eines Fahrtrichtungswechsel-Blinklichts durch die eine oder mehreren Blinklichtvorrichtung(en) eine oder mehrere Innenraumbeleuchtungsvorrichtung(en) (2, 2', 2") derart anzusteuern, dass
- im Bereich des Armaturenbretts (3) des Kraftfahrzeugs (1) ein Lauflicht erzeugt wird, das im Bereich hinter der Lenkhandhabe (7) oder im Bereich der Längsmittelebene des Kraftfahrzeugs (1) beginnt und in die Richtung der Kraftfahrzeugseite läuft, bei der das Fahrtrichtungswechsel-Blinklicht erzeugt wird,
- im Dachbereich (6) des Kraftfahrzeugs (1) ein Lauflicht erzeugt wird, das im Bereich der Längsmittelebene des Kraftfahrzeugs (1) beginnt und in die Richtung der Fahrzeugseite läuft, bei der das Fahrtrichtungswechsel-Blinklicht erzeugt wird, und/oder
- im Bereich der Fahrertür (4) oder der Beifahrertür (4') ein Lauflicht erzeugt wird, derart, dass das Lauflicht im Bereich der Tür (4, 4') erzeugt wird, die sich an der Seite des Kraftfahrzeugs (1) befindet, bei der das Fahrtrichtungswechsel-Blinklicht erzeugt wird, und das Lauflicht an dem der Front des Kraftfahrzeugs (1) zugewandten Ende der Innenraumbeleuchtungsvorrichtung (2') beginnt und in Richtung des dem Heck des Kraftfahrzeugs (1) zugewandten Endes der Innenraumbeleuchtungsvorrichtung (2') läuft.

5. Kraftfahrzeug (1) gemäß Anspruch 3 oder 4,
**dadurch gekennzeichnet, dass**
die Steuerungseinrichtung dazu eingerichtet ist, während des Erzeugens eines Fahrtrichtungswechsel-Blinklichts durch die eine oder mehreren Blinklichtvorrichtung(en) eine oder mehrere Innenraumbeleuchtungsvorrichtung(en) (2, 2', 2") derart anzusteuern, dass
- im Bereich des Armaturenbretts (3) des Kraftfahrzeugs (1) ein Lauflicht erzeugt wird, das im Bereich hinter der Lenkhandhabe (7) oder im Bereich der Längsmittelebene des Kraftfahrzeugs (1) beginnt und in die Richtung der Kraftfahrzeugseite läuft, bei der das Fahrtrichtungswechsel-Blinklicht erzeugt wird, und
- im Bereich der Fahrertür (4) oder der Beifahrertür (4') ein Lauflicht erzeugt wird, derart, dass das Lauflicht im Bereich der Tür (4, 4') erzeugt wird, die sich an der Seite des Kraftfahrzeugs (1) befindet, bei der das Fahrtrichtungswechsel-Blinklicht erzeugt wird, und das Lauflicht an dem der Front des Kraftfahrzeugs (1) zugewandten Ende der Innenraumbeleuchtungsvorrichtung (2') beginnt und in Richtung des dem Heck des Kraftfahrzeugs (1) zugewandten Endes der Innenraumbeleuchtungsvorrichtung (2') läuft, wobei das Lauflicht an der jeweiligen Tür (4, 4') beginnt, sobald das Lauflicht im Bereich des Armaturenbretts (3) das seitliche Ende der Innenraumbeleuchtungsvorrichtung (2) erreicht hat.

6. Kraftfahrzeug (1) gemäß Anspruch 3,
**dadurch gekennzeichnet, dass**
die Steuerungseinrichtung dazu eingerichtet ist, bei Erzeugen eines Warnblinklichts durch die eine oder mehreren Blinklichtvorrichtung(en) eine oder mehrere Innenraumbeleuchtungsvorrichtung(en) (2, 2', 2") derart anzusteuern, dass
- im Bereich des Armaturenbretts (3) des Kraftfahrzeugs (1) zwei Lauflichter erzeugt werden, die im Bereich hinter der Lenkhandhabe (7) oder im Bereich der Längsmittelebene des Kraftfahrzeugs (1) beginnen und gleichzeitig auseinander in Richtung der beiden Fahrzeuglängsseiten laufen,
- im Dachbereich (6) des Kraftfahrzeugs (1) zwei Lauflichter erzeugt werden, die im Bereich der Längsmittelebene des Kraftfahrzeugs (1) beginnen und gleichzeitig auseinander in Richtung der beiden Fahrzeuglängsseiten laufen, und/oder
- im Bereich der Fahrertür (4) und der Beifahrertür (4') jeweils ein Lauflicht erzeugt wird, derart, dass die Lauflichter gleichzeitig an der der Front des Kraftfahrzeugs (1) zugewandten Enden der Innenraumbeleuchtungsvorrichtungen (2') beginnen und in Richtung der dem Heck des Kraftfahrzeugs (1) zugewandten Enden der Innenraumbeleuchtungsvorrichtungen (2') laufen.

7. Kraftfahrzeug (1) gemäß Anspruch 6,
**dadurch gekennzeichnet, dass**
die Steuerungseinrichtung dazu eingerichtet ist, bei Erzeugen eines Warnblinklichts durch die eine oder mehreren Blinklichtvorrichtung(en) eine oder mehrere Innenraumbeleuchtungsvorrichtung(en) (2, 2', 2") derart anzusteuern, dass
- im Bereich des Armaturenbretts (3) des Kraftfahrzeugs (1) zwei Lauflichter erzeugt werden, die im Bereich hinter der Lenkhandhabe (7) oder im Bereich der Längsmittelebene des Kraftfahrzeugs (1) beginnen und gleichzeitig auseinander in Richtung der beiden Fahrzeuglängsseiten laufen, und
- im Bereich der Fahrertür (4) und der Beifahrertür (4') jeweils ein Lauflicht erzeugt wird, derart, dass die Lauflichter gleichzeitig an den der Front des Kraftfahrzeugs (1) zugewandten Enden der Innenraumbeleuchtungsvorrichtungen (2') beginnen und in Richtung der dem Heck des Kraftfahrzeugs (1) zugewandten Enden der Innenraumbeleuchtungsvorrichtungen (2') laufen, wobei die Lauflichter an der jeweiligen Tür (4, 4') beginnen, sobald die Lauflichter im Bereich des Armaturenbretts (3) die seitliche Enden der Innenraumbeleuchtungsvorrichtung (2) erreicht haben.

8. Kraftfahrzeug (1) gemäß einem der Ansprüche 3 bis 7,
**dadurch gekennzeichnet, dass**
die Steuerungseinrichtung auch dazu eingerichtet ist, Daten bezüglich einer Stellung einer Lehne von wenigstens einem in Fahrtrichtung ausgerichteten Sitz der ersten Sitzreihe des Kraftfahrzeugs (1) empfangen und während des Erzeugens eines Fahrtrichtungswechsel-Blinklichts oder eines Warnblinklichts durch die eine oder mehreren Blinklichtvorrichtung(en) die eine oder mehreren Innenraumbeleuchtungsvorrichtung(en) (2, 2', 2") derart anzusteuern zu können, dass
- bis zu bei einem ersten vorgebbaren Winkel zwischen der Lehne des wenigstens einen Sitzes und dem in Richtung zur Front des Kraftfahrzeug (1) weisenden Teils der Längsachse des Kraftfahrzeugs (1), (ein) Lauflicht(er) nur im Bereich des Armaturenbretts (3) und/oder im Bereich der Fahrer- (4) und/oder Beifahrertür (4'), und
- ab einem sich an den ersten vorgebbaren Winkel anschließenden, größeren zweiten Winkel der Lehne des wenigstens einen Sitzes, alternativ oder ergänzend zu Lauflicht im Bereich des Armaturenbretts (3) und/oder im Bereich der Fahrer- (4) und/oder Beifahrertür (4) (ein) Lauflicht(er) im Dachbereich (6) des Kraftfahrzeugs (1)
erzeugt wird/werden.

9. Verfahren zum Erzeugen von Lauflicht mittels einer oder mehrerer Innenraumbeleuchtungsvorrichtung(en) (2, 2', 2") im Innenraum eines Kraftfahrzeugs (1), das Einrichtungen zur autonomen Steuerung des Kraftfahrzeugs (1) aufweist, umfassend die Schritte,
- Bereitstellen bei einem Kraftfahrzeug (1) von einer oder mehrerer Blinklichtvorrichtung(en) zum Erzeugen eines Fahrtrichtungswechsel-Blinklichts oder eines Warnblinklichts, einer oder mehrerer längsförmiger Innenraumbeleuchtungsvorrichtung(en) (2, 2', 2") zum Abstrahlen von sichtbarem Licht in Form von Lauflicht in den Innenraum des Kraftfahrzeugs (1), und einer der/den Innenraumbeleuchtungsvorrichtung(en) (2, 2', 2") zugeordneten Steuerungseinrichtung zum Steuern der Innenraumbeleuchtungsvorrichtung(en) (2, 2', 2"), wobei die Steuerungseinrichtung dazu eingerichtet ist, das Erzeugen eines Fahrtrichtungswechsel-Blinklichts oder eines Warnblinklichts durch die eine oder mehreren Blinklichtvorrichtung(en) zu erkennen,
- Erkennen durch die Steuerungseinrichtung, dass durch die eine oder mehreren Blinklichtvorrichtung(en) ein Fahrtrichtungswechsel-Blinklicht oder ein Warnblinklicht erzeugt wird, und
- Ansteuern der einen oder mehreren Innenraumbeleuchtungsvorrichtung(en) (2, 2', 2") durch die Steuerungseinrichtung derart, dass während des Erzeugens des Fahrtrichtungswechsel-Blinklichts oder des Warnblinklichts durch die eine oder mehreren Blinklichtvorrichtung(en) durch die eine oder mehreren Innenraumbeleuchtungsvorrichtung(en) (2, 2', 2") sichtbares Licht in Form eines Lauflichts abgestrahlt wird, nur wenn sich das Kraftfahrzeug (1) im Status einer autonomen Steuerung befindet.

## Claims

1. Motor vehicle (1) having one or more flashing light device(s) for generating a drive direction change flashing light or a warning flashing light, one or more longitudinally-shaped interior space illumination device(s) (2, 2', 2") for emitting visible light into the interior space of the motor vehicle (1) and a control device assigned to the interior space illumination device(s) (2, 2', 2") for controlling the interior space illumination device(s) (2, 2' 2"),
wherein the control device is designed to recognise the generation of a drive direction change flashing light or of a warning flashing light by means of the one or more flashing light device(s),
**characterised in that** the one or more longitudinally-shaped interior space illumination device(s) (2, 2', 2") is/are designed to be able to emit visible light in the form of a moving light, and
- the motor vehicle (1) has furthermore devices for the autonomous control of the motor vehicle (1) and the control device is designed, during the generation of a drive direction change flashing light or of a warning flashing light by means of the one or more flashing light device(s) to actuate the one or more interior space illumination device(s) (2, 2', 2") in such a manner that it/they emits/emit visible light in the form of a moving light only when the motor vehicle (1) is in the status of an autonomous control.

2. Motor vehicle (1) according to claim 1,
**characterised in that**
the one or more interior space illumination device(s) (2, 2', 2") is/are designed to be able to emit moving light having at least one yellow and/or one red colour.

3. Motor vehicle (1) according to claim 1 or 2,
**characterised in that**
the one or more interior space illumination device(s) (2, 2', 2") is/are disposed in the region of the dashboard (3), the inner side of the driver and passenger door (4, 4') and/or the inner side of the roof region (6) abutting on the windscreen (5) of the motor vehicle (1).

4. Motor vehicle (1) according to claim 3,
**characterised in that**
the control device is designed, during the generation of a drive direction change flashing light by means of the one or more flashing light device(s) to actuate one or more interior space illumination device(s) (2, 2', 2") in such a manner that
- in the region of the dashboard (3) of the motor vehicle (1) a moving light is generated which starts in the region behind the steering wheel (7) or in the region of the longitudinal central plane of the motor vehicle (1) and runs in the direction of the motor vehicle side at which the drive direction change flashing light is generated,
- in the roof region (6) of the motor vehicle (1) a moving light is generated which starts in the region of the longitudinal central plane of the motor vehicle (1) and runs in the direction of the motor vehicle side at which the drive direction change flashing light is generated, and/or
- in the region of the driver door (4) or the passenger door (4') a moving light is generated in such a manner that the moving light is generated in the region of the door (4, 4') which is located at the side of the motor vehicle (1) at which the drive direction change flashing light is generated, and the moving light begins at the end of the interior space illumination device (2') facing the front of the motor vehicle (1) and runs in the direction of the end of the interior space illumination device (2') facing the rear of the motor vehicle (1).

5. Motor vehicle (1) according to claim 3 or 4,
**characterised in that**
the control device is designed, during the generation of a drive direction change flashing light by means of the one or more flashing light device(s) to actuate one or more interior space illumination device(s) (2, 2', 2") in such a manner that
- in the region of the dashboard (3) of the motor vehicle (1) a moving light is generated which begins in the region behind the steering wheel (7) or in the region of the longitudinal central plane of the motor vehicle (1) and runs in the direction of the motor vehicle side at which the drive direction change flashing light is generated, and
- in the region of the driver door (4) or the passenger door (4') a moving light is generated in such a manner that the moving light is generated in the region of the door (4, 4') which is located at the side of the motor vehicle (1) at which the drive direction change flashing light is generated, and the moving light begins at the end of the interior space illumination device (2') facing the front of the motor vehicle (1) and runs in the direction of the end of the interior space illumination device (2') facing the rear of the motor vehicle (1), wherein the moving light begins at the respective door (4, 4') as soon the moving light in the region of the dashboard (3) has reached the lateral end of the interior space illumination device (2).

6. Motor vehicle (1) according to claim 3,
**characterised in that**
the control device is designed, when generating a warning flashing light by means of the one or more flashing light device(s), to actuate one or more interior space illumination device(s) (2, 2', 2") in such a manner that
- in the region of the dashboard (3) of the motor vehicle (1), two moving lights are generated, which begin in the region behind the steering wheel (7) or in the region of the longitudinal central plane of the motor vehicle (1) and run simultaneously away from one another in the direction of the two vehicle longitudinal sides,
- in the roof region (6) of the motor vehicle (1), two moving lights are generated, which begin in the region of the longitudinal central plane of the motor vehicle (1) and run simultaneously away from one another in the direction of the two vehicle longitudinal sides, and/or
- in the region of the driver door (4) and the passenger door (4') respectively one moving light is generated such that the moving lights begin simultaneously at the ends of the interior space illumination devices (2') facing the front of the motor vehicle (1), and run in the direction of the ends of the interior space illumination devices (2') facing the rear of the motor vehicle (1).

7. Motor vehicle (1) according to claim 6,
**characterised in that**
the control device is designed, when generating a warning flashing light by means of the one or more flashing light device(s) to actuate one or more interior space illumination device(s) (2, 2', 2") in such a manner that
- in the region of the dashboard (3) of the motor vehicle (1), two moving lights are generated, which begin in the region behind the steering wheel (7) or in the region of the longitudinal central plane of the motor vehicle (1) and run simultaneously away from one another in the direction of the two vehicle longitudinal sides, and
- in the region of the driver door (4) and the passenger door (4') respectively one moving light is generated such that the moving lights begin simultaneously at the ends of the interior space illumination devices (2') facing the front of the motor vehicle (1), and run in the direction of the ends of the interior space illumination devices (2') facing the rear of the motor vehicle (1), wherein the moving lights begin at the respective door (4, 4') as soon as the moving lights in the region of the dashboard (3) have reached the lateral ends of the interior space illumination device (2).

8. Motor vehicle (1) according to any of claims 3 to 7,
**characterised in that**
the control device is also designed to receive data regarding a position of a backrest of at least one seat, oriented in drive direction in the first seating row of the motor vehicle (1) and during the generation of a drive direction change flashing light or a warning flashing light by means of the one or more flashing light device(s) to be able to actuate the one or more interior space illumination device(s) (2, 2', 2") such that
- up to at a first pre-determinable angle between the backrest of the at least one seat and the part of the longitudinal axis of the motor vehicle (1) facing in the direction of the front of the motor vehicle (1), (a) moving light(s) is/are generated only in the region of the dashboard (3) and/or in the region of the driver (4) and/or passenger door (4'), and
- from a second angle, which is greater than and adjoining on the first pre-determinable angle, of the backrest of the at least one seat, alternatively or additionally to the moving light in the region of the dashboard (3) and/or in the region of the driver (4) and/or passenger door (4) (a) moving light(s) is/are generated in the roof region (6) of the motor vehicle (1).

9. Method for generating moving light by means of one or more interior space illumination device(s) (2, 2', 2") in the interior space of a motor vehicle (1) which has devices for the autonomous control of the motor vehicle (1), comprising the steps of
- providing at a motor vehicle (1) one or more flashing light device(s) for generating a drive direction change flashing light or a warning flashing light, one or more longitudinally-shaped interior space illumination device(s) (2, 2', 2") for emitting visible light in the form of moving light into the interior space of the motor vehicle (1), and a control device assigned to the interior space illumination device(s) (2, 2', 2") for controlling the interior space illumination device(s) (2, 2', 2"), wherein the control device is designed to recognise the generation of a drive direction change flashing light or of a warning flashing light by the one or more flashing light device(s),
- the control device recognising that a drive direction change flashing light or a warning flashing light is generated by the one or more flashing light device(s), and
- the control device actuating the one or more interior space illumination device(s) (2, 2', 2") such that during the generation of the drive direction change flashing light or the warning flashing light by the one or more flashing light device(s), visible light in the form of a moving light is emitted by the one or more interior space illumination device(s) (2, 2', 2"), only when the motor vehicle (1) is in the status of an autonomous control.

## Revendications

1. Véhicule automobile (1) avec un ou plusieurs dispositif(s) clignotant(s) pour la génération d'un clignotant de changement de direction ou d'un clignotant d'avertissement, un ou plusieurs dispositif(s) d'éclairage de l'habitacle (2, 2', 2") de forme allongée pour la production de lumière visible dans l'habitacle du véhicule automobile (1) et un dispositif de commande associé au(x) dispositif(s) d'éclairage de l'habitacle (2, 2', 2") pour la commande du/des dispositif(s) d'éclairage de l'habitacle (2, 2', 2"),
dans lequel le dispositif de commande est aménagé pour détecter la génération d'un clignotant de changement de direction ou d'un clignotant d'avertissement par les un ou plusieurs dispositif(s) clignotant(s),
**caractérisé en ce que** les un ou plusieurs dispositif(s) d'éclairage de l'habitacle (2, 2', 2") de forme allongée est/sont aménagé(s) pour pouvoir produire de la lumière visible sous la forme d'une chaîne lumineuse,
- le véhicule automobile (1) présente en outre des dispositifs pour la commande autonome du véhicule automobile (1) et le dispositif de commande est aménagé pour commander, pendant la génération d'un clignotant de changement de direction ou d'un clignotant d'avertissement par les un ou plusieurs dispositif(s) clignotant(s), les un ou plusieurs dispositif(s) d'éclairage de l'habitacle (2, 2', 2") uniquement lorsque celui-ci produit/ceux-ci produisent de la lumière visible sous la forme d'une chaîne lumineuse, lorsque le véhicule automobile (1) se trouve à l'état de commande autonome.

2. Véhicule automobile (1) selon la revendication 1,
**caractérisé en ce que**
les un ou plusieurs dispositif(s) d'éclairage de l'habitacle (2, 2', 2") est/sont aménagé(s) pour pouvoir produire une chaîne lumineuse avec au moins une couleur jaune et/ou une couleur rouge.

3. Véhicule automobile (1) selon la revendication 1 ou 2,
**caractérisé en ce que**
les un ou plusieurs dispositif(s) d'éclairage de l'habitacle (2, 2', 2") est/sont agencé(s) dans la zone du tableau de bord (3), du côté intérieur de la porte conducteur et passager (4, 4') et/ou du côté intérieur de la zone de toit (6) se raccordant au pare-brise (5) du véhicule automobile (1).

4. Véhicule automobile (1) selon la revendication 3,
**caractérisé en ce que**
le dispositif de commande est aménagé pour commander, pendant la génération d'un clignotant de changement de direction par les un ou plusieurs dispositif(s) clignotant(s), un ou plusieurs dispositif(s) d'éclairage de l'habitacle (2, 2', 2") de sorte que
- dans la zone du tableau de bord (3) du véhicule automobile (1), une chaîne lumineuse est générée, qui commence dans la zone derrière le volant de direction (7) ou dans la zone du plan médian longitudinal du véhicule automobile (1) et court dans la direction du côté de véhicule automobile, duquel le clignotant de changement de direction est généré,
- dans la zone de toit (6) du véhicule automobile (1), une chaîne lumineuse est générée, qui commence dans la zone du plan médian longitudinal du véhicule automobile (1) et court dans la direction du côté de véhicule automobile, duquel le clignotant de changement de direction est généré, et/ou
- dans la zone de la porte conducteur (4) ou de la porte passager (4'), une chaîne lumineuse est générée de sorte que la chaîne lumineuse est générée dans la zone de la porte (4, 4'), qui se trouve sur le côté du véhicule automobile (1), duquel le clignotant de changement de direction est généré, et la chaîne lumineuse commence à l'extrémité tournée vers l'avant du véhicule automobile (1) du dispositif d'éclairage de l'habitacle (2') et court en direction de l'extrémité tournée vers l'arrière du véhicule automobile (1) du dispositif d'éclairage de l'habitacle (2').

5. Véhicule automobile (1) selon la revendication 3 ou 4,
**caractérisé en ce que**
le dispositif de commande est aménagé pour commander, pendant la génération d'un clignotant de changement de direction par les un ou plusieurs dispositif(s) clignotant(s), un ou plusieurs dispositif(s) d'éclairage de l'habitacle (2, 2', 2") de sorte que
- dans la zone du tableau de bord (3) du véhicule automobile (1), une chaîne lumineuse est générée, qui commence dans la zone derrière le volant de direction (7) ou dans la zone du plan médian longitudinal du véhicule automobile (1) et court dans la direction du côté de véhicule automobile, duquel le clignotant de changement de direction est généré, et
- dans la zone de la porte conducteur (4) ou de la porte passager (4'), une chaîne lumineuse est générée de sorte que la chaîne lumineuse est générée dans la zone de la porte (4, 4'), qui se trouve sur le côté du véhicule automobile (1), duquel le clignotant de changement de direction est généré, et la chaîne lumineuse commence à l'extrémité tournée vers l'avant du véhicule automobile (1) du dispositif d'éclairage de l'habitacle (2') et court en direction de l'extrémité tournée vers l'arrière du véhicule automobile (1) du dispositif d'éclairage de l'habitacle (2'), dans lequel la chaîne lumineuse commence au niveau de la porte (4, 4') respective, dès que la chaîne lumineuse a atteint dans la zone du tableau de bord (3) l'extrémité latérale du dispositif d'éclairage de l'habitacle (2).

6. Véhicule automobile (1) selon la revendication 3,
**caractérisé en ce que**
le dispositif de commande est aménagé pour commander, lors de la génération d'un clignotant d'avertissement par les un ou plusieurs dispositif(s) clignotant(s), un ou plusieurs dispositif(s) d'éclairage de l'habitacle (2, 2', 2") de sorte que
- dans la zone du tableau de bord (3) du véhicule automobile (1), deux chaînes lumineuses sont générées, qui commencent dans la zone derrière le volant de direction (7) ou dans la zone du plan médian longitudinal du véhicule automobile (1) et se séparent en même temps en direction des deux côtés longitudinaux de véhicule,
- dans la zone de toit (6) du véhicule automobile (1), deux chaînes lumineuses sont générées, qui commencent dans la zone du plan médian longitudinal du véhicule automobile (1) et se séparent en même temps en direction des deux côtés longitudinaux de véhicule, et/ou
- dans la zone de la porte conducteur (4) et de la porte passager (4'), respectivement une chaîne lumineuse est générée de sorte que les chaînes lumineuses commencent en même temps aux extrémités tournées vers l'avant du véhicule automobile (1) des dispositifs d'éclairage de l'habitacle (2') et courent en direction des extrémités tournées vers l'arrière du véhicule automobile (1) des dispositifs d'éclairage de l'habitacle (2').

7. Véhicule automobile (1) selon la revendication 6,
**caractérisé en ce que**
le dispositif de commande est aménagé pour commander, lors de la génération d'un clignotant d'avertissement par les un ou plusieurs dispositif(s) clignotant(s), un ou plusieurs dispositif(s) d'éclairage de l'habitacle (2, 2', 2") de sorte que
- dans la zone du tableau de bord (3) du véhicule automobile (1), deux chaînes lumineuses sont générées, qui commencent dans la zone derrière le volant de direction (7) ou dans la zone du plan médian longitudinal du véhicule automobile (1) et se séparent en même temps en direction des deux côtés longitudinaux de véhicule, et
- dans la zone de la porte conducteur (4) et de la porte passager (4'), respectivement une chaîne lumineuse est générée de sorte que les chaînes lumineuses commencent en même temps aux extrémités tournées vers l'avant du véhicule automobile (1) des dispositifs d'éclairage de l'habitacle (2') et courent en direction des extrémités tournées vers l'arrière du véhicule automobile (1) des dispositifs d'éclairage de l'habitacle (2'), dans lequel les chaînes lumineuses commencent au niveau de la porte (4, 4') respective, dès que les chaînes lumineuses ont atteint dans la zone du tableau de bord (3) les extrémités latérales du dispositif d'éclairage de l'habitacle (2).

8. Véhicule automobile (1) selon l'une quelconque des revendications 3 à 7,
**caractérisé en ce que**
le dispositif de commande est également aménagé pour pouvoir recevoir des données relatives à une position d'un dossier d'au moins un siège orienté dans le sens de marche de la première rangée de sièges du véhicule automobile (1) et commander, pendant la génération d'un clignotant de changement de direction ou d'un clignotant d'avertissement par les un ou plusieurs dispositif(s) clignotant(s), les un ou plusieurs dispositif(s) d'éclairage de l'habitacle (2, 2', 2") de sorte que
- jusqu'à à un premier angle pouvant être prédéfini entre le dossier de l'au moins un siège et la partie dirigée en direction de l'avant du véhicule automobile (1) de l'axe longitudinal du véhicule automobile (1), une/des chaîne(s) lumineuse(s) est/sont générée(s) uniquement dans la zone du tableau de bord (3) et/ou dans la zone de la porte conducteur (4) ou de la porte passager (4'), et
- à partir d'un deuxième angle plus grand, se raccordant au premier angle pouvant être prédéfini, du dossier de l'au moins un siège, en variante ou en complément de la chaîne lumineuse dans la zone du tableau de bord (3) et/ou dans la zone de la porte conducteur (4) ou de la porte passager (4), une/des chaîne(s) lumineuse(s) est/sont générée(s) dans la zone du toit (6) du véhicule automobile (1).

9. Procédé pour la génération d'une chaîne lumineuse au moyen d'un ou plusieurs dispositif(s) d'éclairage de l'habitacle (2, 2', 2") dans l'habitacle d'un véhicule automobile (1), qui présente des dispositifs pour la commande autonome du véhicule automobile (1), comprenant les étapes,
- mise à disposition sur un véhicule automobile (1) d'un ou plusieurs dispositif(s) clignotant(s) pour la génération d'un clignotant de changement de direction ou d'un clignotant d'avertissement, d'un ou plusieurs dispositif(s) d'éclairage de l'habitacle (2, 2', 2") de forme allongée pour la production de lumière visible sous forme de chaîne lumineuse dans l'habitacle du véhicule automobile (1), et d'un dispositif de commande associé au(x) dispositif(s) d'éclairage de l'habitacle (2, 2', 2") pour la commande du/des dispositif(s) d'éclairage de l'habitacle (2, 2', 2"), dans lequel le dispositif de commande est aménagé pour détecter la génération d'un clignotant de changement de direction ou d'un clignotant d'avertissement par les un ou plusieurs dispositif(s) clignotant(s),
- détection par le dispositif de commande du fait qu'un clignotant de changement de direction ou un clignotant d'avertissement est généré par les un ou plusieurs dispositif(s) clignotant(s), et
- commande des un ou plusieurs dispositif(s) d'éclairage de l'habitacle (2, 2', 2") par le dispositif de commande de sorte que, pendant la génération du clignotant de changement de direction ou du clignotant d'avertissement par les un ou plusieurs dispositif(s) clignotant(s) par les un ou plusieurs dispositif(s) d'éclairage de l'habitacle (2, 2', 2"), de la lumière visible est produite sous la forme d'une chaîne lumineuse, uniquement lorsque le véhicule automobile (1) se trouve à l'état de commande autonome.
